# EUROPEAN PATENT APPLICATION

(11) **EP 1 193 491 A2**
(43) Date of publication of application: **03.04.2002**
(21) Application number: 01307731.8
(22) Date of filing: 11.09.2001
(51) Int. Cl.: G01N 23/04

(54) **Radiographic system and method for inspecting aircraft fuselages**

(30) Priority: 12.09.2000 US 659912
(71) Applicant: GENERAL ELECTRIC COMPANY, Schenectady, NY 12345 (US)
(72) Inventor: Birdwell, Thomas William, Middeltown, Ohio 45044 (US); Galish, Andrew Joseph, West Chester, Ohio 45069 (US)
(74) Representative: Pedder, James Cuthbert

(57) **Abstract**

A radiographic inspection system (10) and method for aircraft fuselages (12) includes a radiation source (16) located on one side of a fuselage (12) and a radiation detector (18) located on another side of the fuselage (12) and positioned to receive radiation from the radiation source (16). Precise manipulators (22,24) are provided for simultaneously moving the radiation source (16) and the radiation detector (18). The source (16) and detector (18) are moved under control of a controller (20) so that the projection of radiation from the radiation source (16) onto the radiation detector (18) from a selected plane of the fuselage (12) stays constant and the projection of radiation from the radiation source (16) onto the radiation detector (18) from other planes of the fuselage (12) varies. The controller (20) processes radiation detected by the radiation source (16) so as to produce a laminographic image having a field of view in a selected plane of the fuselage (12). The laminographic image is displayed on a display (21).

## Description

This invention relates generally to radiographic inspection of aircraft fuselages and more particularly to systems and methods for inspecting aircraft fuselages using laminography techniques.

An aircraft fuselage typically comprises a grid of circumferential frame members and longitudinal stringers covered by a skin of lightweight sheet metal. The skin is ordinarily attached to the frame members and stringers by means of rivets or the like. To ensure passenger comfort at high altitudes, aircraft are provided with cabin pressurization systems that produce near sea-level air pressure breathing environments in the aircraft cabin. The application of cabin pressure causes the skin, frame members and stringers to expand slightly. When the pressure is removed, the skin, frame members and stringers return to their normal shape. Although the pressure differentials involved are relatively small, the repeated cycles of stress imposed on the fuselage structure by the pressurization and depressurization sequence that occurs during each flight can lead to fatigue and crack formation. This fatigue damage is often assisted by corrosion of the fuselage structures.

Fatigue cracks by nature can be extremely small in size and difficult to detect. The cracks are normally so small that routine pressurization of the aircraft cabin will not result in detection because the tiny cracks will not cause a detectable pressure loss in the aircraft. The combined effect of corrosion and cyclic stress can also cause looseness around the rivets and/or rivet cracking. If not detected, this condition could result in skin separation from the frame members and stringers.

Traditionally, aircraft fuselage inspection relies largely on visual inspection techniques. These techniques rely heavily on human ability and are limited by ambient lighting conditions, environmental effects, and the inspector's physical and mental limitations such as eye vision corrections, time constraints, mental attitude, concentration and judgment. Furthermore, visual inspection techniques require extensive disassembly of the aircraft. This approach is thus, time consuming, labor intensive and expensive.

Radiography is another approach to aircraft fuselage inspection that has been proposed. While this approach can reduce the amount of aircraft disassembly required with traditional visual inspections, internal cabin objects can significantly complicate x-ray images, thereby masking defects and making their identification and quantification more difficult. These objects include overhead bins, bulkheads, air masks, oxygen plumbing, lights, electrical wiring, fasteners, lavatory and galley fixtures and so on. Where possible, the inspector can select viewing angles to image items of interest without interference. But where this is not possible, the areas must be disassembled and visually inspected.

Accordingly, there is a need for method and apparatus for radiographic inspection of aircraft fuselages that permits all or most of a fuselage to be inspected without disassembly.

The above-mentioned need is met by the present invention which provides a radiographic inspection system and method for aircraft fuselages in which a radiation source is located on one side of the fuselage and a radiation detector is located on another side of the fuselage and positioned to receive radiation from the radiation source. Means are provided for simultaneously moving the radiation source and the radiation detector so that the projection of radiation from the radiation source onto the radiation detector from a selected plane of the fuselage stays constant and the projection of radiation from the radiation source onto the radiation detector from other planes of the fuselage varies.

In a preferred embodiment, the system further includes means for processing radiation detected by the radiation source so as to produce a laminographic image having a field of view in a selected plane of the fuselage and a means for displaying the laminographic image.

The present invention and its advantages over the prior art will become apparent upon reading the following detailed description and the appended claims with reference to the accompanying drawings.

The invention will now be described in greater detail, by way of example, with reference to the drawings, in which:-

Figure 1 is a schematic view of a radiographic inspection system for inspecting aircraft fuselages.

Figure 2 is a perspective view of a portion of the radiographic inspection system of Figure 1.

Figure 3 is a schematic view showing the operation of the radiographic inspection system.

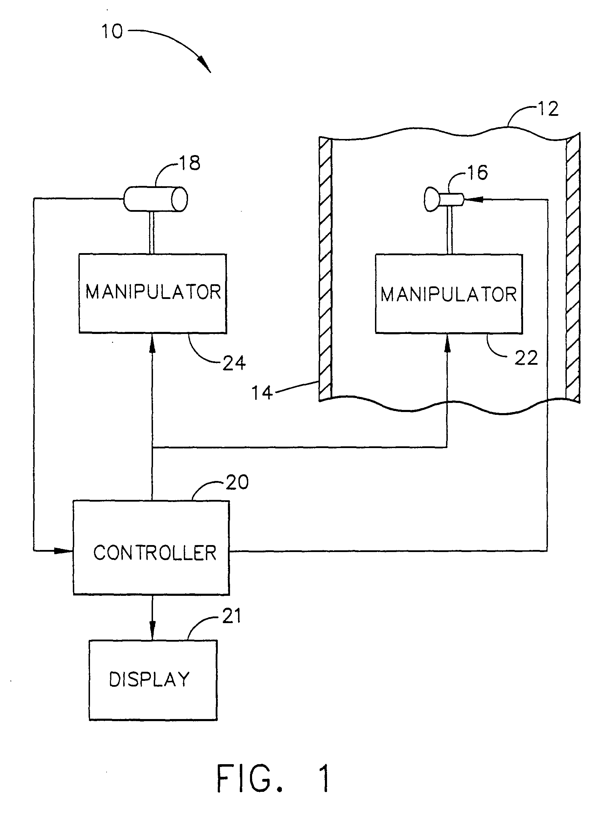

Referring to the drawings wherein identical reference numerals denote the same elements throughout the various views, Figure 1 schematically shows a radiographic inspection system 10 for inspecting an aircraft fuselage 12 using radiographic laminography techniques. The fuselage 12 generally comprises a cylindrical wall 14 made up of a grid of circumferential frame members and longitudinal stringers covered by a skin of lightweight sheet metal. The system 10 includes a radiation source 16 located on a first side of the fuselage wall 14 and a radiation detector 18 located on a second, opposite side of the fuselage wall 14. The radiation source 16 and radiation detector 18 are relatively situated on opposite sides of the wall 14 so that radiation emitted by the radiation source 16 irradiates the fuselage wall 14 and then impinges on the radiation detector 18. As shown in Figure 1, the radiation source 16 is located inside of the fuselage 12, and the radiation detector 18 is located outside of the fuselage 12. However, it should be noted that this arrangement could alternatively be reversed so that the radiation source 16 is outside and the radiation detector 18 is inside the fuselage 12.

The radiation source 16 is preferably, but not necessarily, a standard industrial X-ray tube powered by a high voltage power supply (not shown). Alternative radiation sources, such as an isotopic radiation source producing gamma rays, could be used as well. The radiation source 16 emits a cone beam of radiation to provide the necessary illumination of the radiation detector 18 so that laminographic images of the fuselage 12 can be produced, as will be described in more detail below. The radiation detector 18 can be any means that is capable of processing radiation emitted by the radiation source 16 into a viewable image. Although X-ray film could be used, it is generally preferred that the radiation detector 18 be of the type which converts impinging radiation into an electrical output signal. Many suitable X-ray detectors are commercially available. As is known in the art, such X-ray detectors generally have an X-ray sensitive area and means for producing an output signal that is indicative of the X-rays impinging on the sensitive area.

The image data signals output by the radiation detector 18 are fed to a controller 20, which can be a conventional computer unit. The controller 20 processes these signals and causes a corresponding image to be generated on a display 21. An operator is then able to view the displayed image to inspect for defects. The data image signals are also stored in a memory in the controller 20. The controller 20 also controls the operation of the radiation source 16.

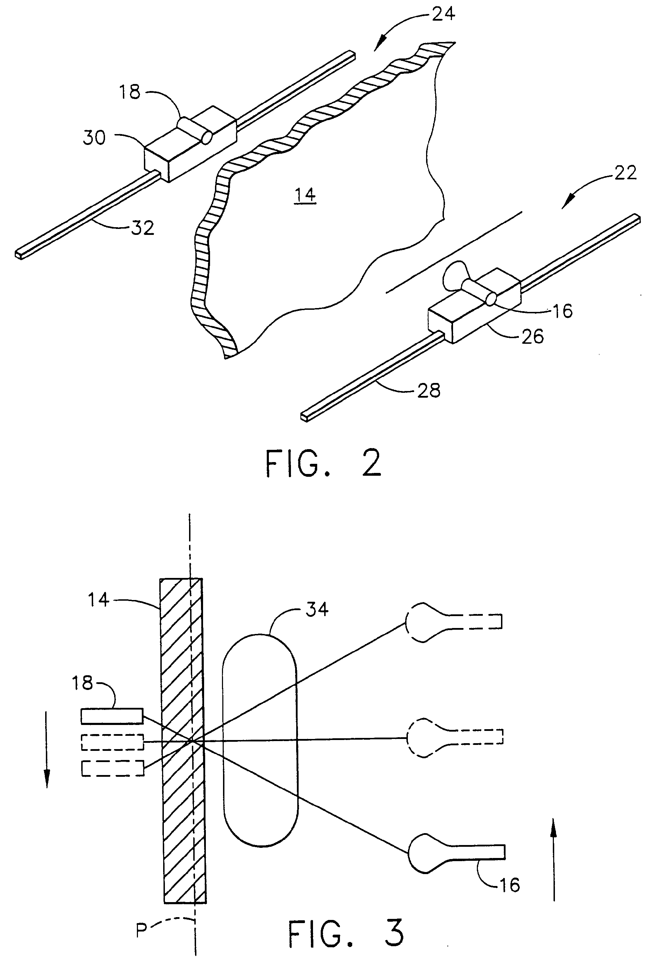

A first precise manipulator 22 is provided for moving the radiation source 16 with respect to the fuselage 12, and a second precise manipulator 24 is provided for moving the radiation detector 18 with respect to the fuselage 12. The precise manipulators 22 and 24 can be any type of device capable of producing the desired motion. This would include robotic devices, guide rail systems and the like. For example, Figure 2 shows the first and second precise manipulators 22 and 24 implemented as guide rail systems. Specifically, the first precise manipulator 22 includes a first carrier 26 to which the radiation source 16 is mounted. The first carrier 26 is slidably mounted on a first guide rail 28 that is disposed on one side of the fuselage wall 14. The first carrier 26 is moved back and forth along the first guide rail 28 under the control of the controller 20. The motion is produced by any conventional motive means (not shown) in a manner known in the art. Similarly, the second precise manipulator 24 includes a second carrier 30 to which the radiation detector 18 is mounted. The second carrier 30 is slidably mounted on a second guide rail 32 that is disposed on the opposite side of the fuselage wall 14 from the first guide rail 28. The second carrier 30 is moved back and forth along the second guide rail 32. As with the first precise manipulator 22, the second carrier 30 is moved under the control of the controller 20 in a manner known in the art. The controller 20 moves the first and second carriers 26 and 30, and thus the radiation source 16 and radiation detector 18, in a coordinated fashion, as will be discussed in more detail below.

The radiation source 16 and the radiation detector 18 are thus configured for relative, parallel motion with respect to each other. The radiation source 16 and the radiation detector 18 are also arranged to move laterally with respect to the fuselage wall 14, either longitudinally or circumferentially relative to the fuselage 12. The radiation source 16 and the radiation detector 18 can be configured for linear motion as shown in Figure 2 or non-linear motion is also possible. The range of relative motion of the radiation source 16 and the radiation detector 18 is sufficient to permit the system 10 to produce laminographic images.

As shown in Figure 2, the first and second precise manipulators 22 and 24 are located on opposite sides of the fuselage wall 14. Thus, as noted above, the radiation source 16 and the radiation detector 18 are located on opposite sides of the fuselage wall 14. The first manipulator 22 and the radiation source 16 can be located either inside or outside of the fuselage 12, with the second manipulator 24 and the radiation detector 18 being conversely located either outside or inside of the fuselage 12. Whichever one of the precise manipulators 22, 24 that is located inside the fuselage 12 is configured so as to move the radiation source 16 or the radiation detector 18, as the case may be, through the desired range of motion without interference with any objects located inside the fuselage 12. Accordingly, such objects (which may include overhead bins, bulkheads, air masks, oxygen plumbing, lights, electrical wiring, fasteners, lavatory and galley fixtures, etc.) need not be removed for an inspection. The first and second precise manipulators 22 and 24 are further positioned so that the radiation source 16 and the radiation detector 18 are located a desired distance from the fuselage wall 14 and each other. Generally, the source and detector positioning is such that the system 10 can produce laminographic images of sufficiently high resolution given the focal spot size and power output of the radiation source 16.

In operation, the radiation source 16 and the radiation detector 18 are positioned on opposite sides of the fuselage wall 14, one inside and one outside of the fuselage 12. The radiation source 16 and the radiation detector 18 are roughly aligned with the area of the fuselage 12 that is to be inspected. This could be a frame member, a stringer or a portion of the fuselage skin. Referring now to Figure 3, the radiation source 16 and the radiation detector 18 are initially positioned so that the projection of radiation from the radiation source 16 onto the radiation detector 18 intercepts the area of the fuselage 12 to be inspected. Then, the radiation source 16 is activated and the controller 20 causes the first and second manipulators 22 and 24 to simultaneously move the radiation source 16 and the radiation detector 18 in opposite directions.

The radiation source 16 and the radiation detector 18 move with respect to the fuselage 12 in a coordinated fashion so that for each subsequent position (shown in phantom lines in Figure 3), the projection of radiation from the radiation source 16 onto the radiation detector 18 intercepts the area of the fuselage 12 to be inspected at a constant focal plane P in the fuselage wall 14. While the projection of radiation from the radiation source 16 onto the radiation detector 18 stays constant with respect to focal plane P, the projection of radiation with respect to all other planes between the radiation source 16 and the radiation detector 18 varies. Because of this variation, these other planes are blurred in the resultant image. This blurring reduces the contribution from regions in the field of view that are not of interest, and increases the contribution of the focal plane P, making its features more apparent. Thus, any objects in the fuselage 12 (for example, overhead bin 34 in Figure 3) that lie in the field of view will be blurred. Using these laminography techniques allows the area of interest to be inspected without the need to remove intervening objects such as the overhead bin 34.

The radiation that passes through the fuselage wall 14 and impinges on the radiation detector 18 is converted into electrical signals that are fed to the controller 20. The controller 20 processes these signals and generates laminographic images that are displayed on the display 21. An operator viewing these laminographic images can easily discern the area of interest from other objects and thus inspect that area for defects. Different planes in the fuselage wall 14 can be imaged for inspection by changing the geometric relationship between the fuselage wall 14 and the radiation detector 18 and/or the radiation source 16. For example, is the second precise manipulator 24 is positioned so that the radiation detector 18 is located farther away from the fuselage wall 14, then the focal plane P would be located closer to the outer surface of the fuselage wall 14.

The foregoing has described a radiographic inspection system 10 for inspecting aircraft fuselages using laminography techniques. The increased ability to discern areas of interest of a fuselage improves the ability to detect defects. This reduces the incidence of wrongly identifying features of objects in the field of view as fuselage defects or, more importantly, misidentifying fuselage defects as artifacts. This improvement significantly increases the percentage of a fuselage that can be inspected without disassembly and visual inspection, thus reducing overall inspection costs greatly. The present invention will also improve the relative determination of the depth location of a defect within the aircraft structure, thereby facilitating disposition and/or repair planning.

For the sake of good order, various aspects of the invention are set out in the following clauses:-
1. A system for radiographic inspection of an aircraft fuselage, said system comprising:
   a radiation source located on one side of said fuselage;
   a radiation detector located on another side of said fuselage, said radiation detector being positioned to receive radiation from said radiation source; and
   means for simultaneously moving said radiation source and said radiation detector so that the projection of radiation from said radiation source onto said radiation detector from a selected plane of said fuselage stays constant and the projection of radiation from said radiation source onto said radiation detector from other planes of said fuselage varies.
2. The system of clause 1 wherein said radiation source is located inside of said fuselage and said radiation detector is located outside of said fuselage.
3. The system of clause 2 wherein said means for simultaneously moving said radiation source and said radiation detector moves said radiation source without interference with any objects in said fuselage.
4. The system of clause 1 wherein said radiation source is located outside of said fuselage and said radiation detector is located inside of said fuselage.
5. The system of clause 4 wherein said means for simultaneously moving said radiation source and said radiation detector moves said radiation detector without interference with any objects in said fuselage.
6. The system of clause 1 wherein said means for simultaneously moving said radiation source and said radiation detector comprises a first manipulator to which said radiation source is mounted and a second manipulator to which said radiation detector is mounted.
7. The system of clause 6 further comprising a controller for controlling said first and second manipulators so that said radiation source and said radiation detector are moved in a opposite directions.
8. The system of clause 7 wherein said controller receives image data signals from said radiation detector.
9. The system of clause 1 wherein said radiation source is an X-ray source and said radiation detector is an X-ray detector.
10. A system for radiographic inspection of an aircraft fuselage, said system comprising:
   a radiation source located on one side of said fuselage;
   a radiation detector located on another side of said fuselage, said radiation detector being positioned to receive radiation from said radiation source;
   means for simultaneously moving said radiation source and said radiation detector in a coordinated fashion;
   means for processing radiation detected by said radiation source so as to produce a laminographic image having a field of view in a selected plane of said fuselage; and
   means for displaying said laminographic image.
11. The system of clause 10 wherein said radiation source is located inside of said fuselage and said radiation detector is located outside of said fuselage.
12. The system of clause 11 wherein said means for simultaneously moving said radiation source and said radiation detector moves said radiation source without interference with any objects in said fuselage.
13. The system of clause 10 wherein said radiation source is located outside of said fuselage and said radiation detector is located inside of said fuselage.
14. The system of clause 13 wherein said means for simultaneously moving said radiation source and said radiation detector moves said radiation detector without interference with any objects in said fuselage.
15. The system of clause 10 wherein said means for simultaneously moving said radiation source and said radiation detector comprises a first manipulator to which said radiation source is mounted and a second manipulator to which said radiation detector is mounted.
16. The system of clause 15 means for processing radiation is a controller that controls said first and second manipulators so that said radiation source and said radiation detector are moved in a opposite directions.
17. The system of clause 10 wherein said radiation source is an X-ray source and said radiation detector is an X-ray detector.
18. A method for radiographic inspection of an aircraft fuselage, said method comprising:
   providing a radiation source on one side of said fuselage; providing a radiation detector on another side of said fuselage, said radiation detector being positioned to receive radiation from said radiation source; irradiating said fuselage and said radiation detector with said radiation source; and
   simultaneously moving said radiation source and said radiation detector so that the projection of radiation from said radiation source onto said radiation detector from a selected plane of said fuselage stays constant and the projection of radiation from said radiation source onto said radiation detector from other planes of said fuselage varies.
19. The method of clause 18 wherein said radiation source is located inside of said fuselage and said radiation detector is located outside of said fuselage.
20. The method of clause 18 wherein said radiation source is located outside of said fuselage and said radiation detector is located inside of said fuselage.
21. The method of clause 18 further comprising processing radiation detected by said radiation source so as to produce a laminographic image having a field of view in said selected plane.
22. The method of clause 21 further comprising displaying said laminographic image.
23. A method for radiographic inspection of an aircraft fuselage, said method comprising:
   providing a radiation source on one side of said fuselage; providing a radiation detector on another side of said fuselage, said radiation
   detector being positioned to receive radiation from said radiation source;
   irradiating said fuselage and said radiation detector with said radiation source; and
   simultaneously moving said radiation source and said radiation detector in a coordinated fashion;
   processing radiation detected by said radiation source so as to produce a laminographic image having a field of view in a selected plane of said fuselage; and
   displaying said laminographic image.
24. The method of clause 23 wherein said radiation source is located inside of said fuselage and said radiation detector is located outside of said fuselage.
25. The method of clause 23 wherein said radiation source is located outside of said fuselage and said radiation detector is located inside of said fuselage.

## Claims

1. A system (10) for radiographic inspection of an aircraft fuselage (12), said system (10) comprising:
a radiation source (16) located on one side of said fuselage (12);
a radiation detector (18) located on another side of said fuselage (12), said radiation detector (18) being positioned to receive radiation from said radiation source (16); and
means (22,24) for simultaneously moving said radiation source (16) and said radiation detector (18) so that the projection of radiation from said radiation source (16) onto said radiation detector (18) from a selected plane of said fuselage (12) stays constant and the projection of radiation from said radiation source (16) onto said radiation detector (18) from other planes of said fuselage (12) varies.

2. The system of claim 1 wherein said radiation source (16) is located inside of said fuselage (12) and said radiation detector (18) is located outside of said fuselage (12).

3. The system of claim 1 or 2 wherein said means (22,24) for simultaneously moving said radiation source (16) and said radiation detector (18) moves said radiation source (16) without interference with any objects in said fuselage (12).

4. A system (10) for radiographic inspection of an aircraft fuselage (12), said system (10) comprising:
a radiation source (16) located on one side of said fuselage (12);
a radiation detector (18) located on another side of said fuselage (12), said radiation detector (18) being positioned to receive radiation from said radiation source (16);
means (22,24) for simultaneously moving said radiation source (16) and said radiation detector (18) in a coordinated fashion;
means (20) for processing radiation detected by said radiation source (16) so as to produce a laminographic image having a field of view in a selected plane of said fuselage (12); and
means (21) for displaying said laminographic image.

5. The system of claim 4 wherein said radiation source (16) is located inside of said fuselage (12) and said radiation detector (18) is located outside of said fuselage (12).

6. The system of claim 4 or 5 wherein said means (22,24) for simultaneously moving said radiation source (16) and said radiation detector (18) moves said radiation source (16) without interference with any objects in said fuselage (12).

7. A method for radiographic inspection of an aircraft fuselage (12), said method comprising:
providing a radiation source (16) on one side of said fuselage (12);
providing a radiation detector (18) on another side of said fuselage (12), said radiation detector (18) being positioned to receive radiation from said radiation source (16);
irradiating said fuselage (12) and said radiation detector (18) with said radiation source (16); and
simultaneously moving said radiation source (16) and said radiation detector (18) so that the projection of radiation from said radiation source (16) onto said radiation detector (18) from a selected plane of said fuselage (12) stays constant and the projection of radiation from said radiation source (16) onto said radiation detector (18) from other planes of said fuselage (12) varies.

8. The method of claim 7 wherein said radiation source (16) is located inside of said fuselage (12) and said radiation detector (18) is located outside of said fuselage (12).

9. A method for radiographic inspection of an aircraft fuselage (12), said method comprising:
providing a radiation source (16) on one side of said fuselage (12);
providing a radiation detector (18) on another side of said fuselage (12), said radiation detector (18) being positioned to receive radiation from said radiation source (16);
irradiating said fuselage (12) and said radiation detector (18) with said radiation source (16); and
simultaneously moving said radiation source (16) and said radiation detector (18) in a coordinated fashion;
processing radiation detected by said radiation source (16) so as to produce a laminographic image having a field of view in a selected plane of said fuselage (12) varies.

10. The method of claim 9 wherein said radiation source (16) is located inside of said fuselage (12) and said radiation detector (18) is located outside of said fuselage (12).
